# EUROPÄISCHE PATENTSCHRIFT

(11) **EP 2 926 529 B1**
(45) Veröffentlichungstag und Bekanntmachung des Hinweises auf die Patenterteilung: **22.02.2023**
(21) Anmeldenummer: 13782658.2
(22) Anmeldetag: 18.10.2013
(51) Int. Cl.: H04W 4/48, H04W 4/80, H04W 76/15, G01C 21/26, H04W 88/02, H04M 1/02, H04L 67/12, H04W 84/18

(54) **VERFAHREN ZUR DATENÜBERMITTLUNG ZWISCHEN EINEM MOBILTELEFON UND EINEM KRAFTFAHRZEUG UND KRAFTFAHRZEUG**
METHOD FOR DATA TRANSMISSION BETWEEN A MOBILE TELEPHONE AND A VEHICLE, AND VEHICLE
PROCÉDÉ DE TRANSMISSION DE DONNÉES ENTRE UN TÉLÉPHONE MOBILE ET UN VEHICULE ET VEHICULE

(30) Priorität: 27.11.2012 DE 102012023109
(43) Veröffentlichungstag der Anmeldung: 07.10.2015
(73) Patentinhaber: Audi AG, 85045 Ingolstadt (DE)
(72) Erfinder: MÖLLER, Malte, 93053 Regensburg (DE); STAHLMANN, Rainer, 85120 Hepberg (DE)
(74) Vertreter: Lindner Blaumeier Patent- und Rechtsanwälte
(86) Internationale Anmeldenummer: PCT/EP2013/003138
(87) Internationale Veröffentlichungsnummer: WO 2014/082697

(56) Entgegenhaltungen:
- EP-A1- 2 124 177
- EP-A1- 2 124 177
- US-A1- 2004 209 655
- US-A1- 2008 143 487
- RAINER STEFFEN ET AL: "Near Field Communication (NFC) in an Automotive Environment", NEAR FIELD COMMUNICATION (NFC), 2010 SECOND INTERNATIONAL WORKSHOP ON, IEEE, PISCATAWAY, NJ, USA, 20. April 2010 (2010-04-20), Seiten 15-20, XP031683705, ISBN: 978-0-7695-3998-0

## Beschreibung

Die Erfindung betrifft ein Verfahren zur Datenübermittlung zwischen einem Mobiltelefon und einem Kraftfahrzeug gemäß des Anspruchs 1. Daneben betrifft die Erfindung ein Kraftfahrzeug gemäß des Anspruchs 16. Weitere bevorzugte Ausführungsformen des Verfahrens gemäß Anspruch 1 sind in den nachgeordneten Ansprüchen 2-15 spezifiziert.

Im Stand der Technik ist es bereits bekannt, eine drahtlose Kommunikationsverbindung zwischen einem Mobiltelefon und einem Kraftfahrzeug, insbesondere über eine entsprechende Kommunikationseinrichtung des Kraftfahrzeugs, herzustellen. Beispielsweise ist es denkbar, hierfür den Kommunikationsstandard "Bluetooth" einzusetzen. Während das Kraftfahrzeug, gegebenenfalls einstellbar, grundsätzlich nach Bluetooth-Kommunikationspartnern sucht, kann durch Aktivierung der Bluetooth-Kommunikationsschnittstelle an dem Mobiltelefon dieses aufgefunden und eine Verbindung hergestellt werden. Selbstverständlich ist auch die Verwendung anderer Kommunikationsstandards denkbar, bei denen eine Kommunikationsschnittstelle an dem Mobiltelefon aktiviert oder aktivierbar ist und eine drahtlose Kommunikationsverbindung zu dem Kraftfahrzeug hergestellt wird. Die drahtlose Kommunikationsverbindung kann im Stand der Technik beispielsweise genutzt werden, um eine Freisprecheinrichtung des Kraftfahrzeugs zum Telefonieren zu verwenden, wobei das Mobiltelefon genutzt wird, um den Telefonanruf aufzubauen.

Bekannt ist es im Stand der Technik ferner, fahrerspezifische Nutzdaten von dem Mobiltelefon an das Kraftfahrzeug zu übertragen. Beispielsweise sind bereits Kraftfahrzeuge bekannt, die Kontakte und/oder Telefonnummern von dem Mobiltelefon abrufen, so dass diese, beispielsweise über ein Mensch-Maschine-Interface, während der Fahrt dem Fahrer vereinfacht zur Anzeige gebracht werden und durch diesen ausgewählt werden können. Dabei handelt es sich weitgehend um Automatismen, auf die der Nutzer des Kraftfahrzeuges keinen oder wenig Einfluss hat. Manche Fahrer jedoch legen einen großen Wert auf den Schutz ihrer persönlichen, fahrerspezifischen Nutzdaten und lehnen eine Übertragung ab, möchten aber trotzdem gerne ihr Mobiltelefon nutzen, um im Kraftfahrzeug, beispielsweise über eine Freisprecheinrichtung, telefonieren zu können.

Es sind ferner Navigationssysteme für Kraftfahrzeuge bekannt. Solche ermitteln aus vorliegendem digitalen Kartenmaterial eine Route zu einem vom Fahrer eingegebenen Zielort. Zielorte werden in bekannten Navigationssystemen manuell, beispielsweise über ein Mensch-Maschine-Interface, eingegeben, oder können in einer Speichereinrichtung für Zielorte gespeichert sein und daraus geladen werden. Nur dann, wenn der Fahrer den Zielort explizit angibt, ist dem Kraftfahrzeug das Ziel des Fahrers bekannt. Dies stellt auch eine Bedingung für eine sinnvolle Information des Fahrers dar.

EP 2 124 177 A1 offenbart ein Verfahren und eine Vorrichtung zur Kommunikation zwischen einem Automobil und einem Verkaufspunkt. Dort wird vorgeschlagen, ein Kraftfahrzeug mit einem Auslesegerät (Reader) zu versehen, wobei der Reader Transaktionsdaten von einer Kreditkarte, einer Smartcard oder einem Mobiltelefon empfangen kann, um sie zum Verkaufspunkt weiterzuleiten. Die Transaktionsdaten können dann genutzt werden, um Güter entfernt von dem Fahrzeug zu kaufen.

Der Artikel "Near Field Communication (NFC) in an Automotive Environment" von Rainer Steffen et al., IEEE Second Workshop on Near Field Communication (NFC) 2010, Piscataway, NJ, USA, 20.4.2010, Seiten 15-20, diskutiert Anwendungsfälle für NFC in Kraftfahrzeugen. Einer dieser Anwendungsfälle ist die erste Herstellung einer Bluetooth-Verbindung zwischen einem Mobiltelefon und einer Freisprecheinrichtung des Kraftfahrzeugs. Hierfür soll eine Vielzahl komplizierter Interaktionen, insbesondere das Eingeben einer PIN auf beiden Seiten und dergleichen, durch eine einzige intuitive Interaktion ersetzt werden, nämlich das Halten des NFC-fähigen Telefons an die NFC-Vorrichtung des Kraftfahrzeugs und eine Bestätigung. Nach diesem ersten Kontakt wird die Verbindung dann immer automatisch hergestellt.

EP 1 568 970 A1 betrifft ein Verfahren zur Eingabe von Zieldaten durch ein Mobilterminal. Hierzu weist das Mobilterminal ein drahtloses Kurzreichweiten-Interface auf, welches eine Verbindung mit dem Navigationssystem aufbaut. Seitens des Mobilterminals wird wenigstens ein Datensatz ausgewählt, der eine Adresse enthält, und dann an das Navigationssystem übertragen, und zwar über die Kurzreichweiten-Schnittstelle. Hieraus kann das Navigationssystem Zieldaten ableiten.

Ein drahtloses Verbindungssystem, mittels dem eine Verbindung zwischen einem fahrzeugseitigen Prozessor und einem mobilen Telefon hergestellt werden kann, ist aus US 2004/0209655 A1 bekannt.

Ein weiteres, ein Mobiltelefon betreffendes Kommunikationssystem ist aus US 2008/0143487 A1 bekannt, wobei bei diesem Kommunikationssystem die RFID-Technologie (Radio Frequency Identification) genutzt wird.

Der Erfindung liegt daher die Aufgabe zugrunde, eine Möglichkeit anzugeben, dem Fahrer eine größere Kontrolle über die Nutzung und Übertragung seiner Nutzdaten zur Verfügung zu stellen.

Zur Lösung dieser Aufgabe sind bei einem Verfahren der eingangs genannten Art die Merkmale des Anspruchs 1 vorgesehen.

Die Nahbereichskommunikation (Near Field Communication - NFC) ist ein im Stand der Technik bereits bekannter internationaler Kommunikationsstandard, der den drahtlosen Austausch von Daten über äußerst kurze Strecken, die kleiner als 4 cm sind, erlaubt. Dabei ist die Herstellung einer Kommunikationsverbindung über die kurze Strecke über entsprechende Kommunikationseinrichtungen möglich. Eine Kernidee der NFC ist es, dass die Kommunikationseinrichtungen der Geräte, zwischen denen eine Datenübertragung stattfinden soll, äußerst nah aneinander gebracht werden müssen. Dies macht den Datenaustausch über NFC zu einem äußerst bewussten Vorgang, insbesondere, nachdem die Kommunikationseinrichtung des Kraftfahrzeugs, über die die zweite Kommunikationsverbindung hergestellt werden soll, definiert angeordnet ist, und vorzugsweise nur durch einen bewussten Vorgang, mithin den dedizierten Willen des Fahrers/Nutzers zur Übertragung von Nutzdaten, das Mobiltelefon in den Übertragungsbereich, in dem die zweite Kommunikationsverbindung hergestellt werden kann, eingebracht werden kann.

Auf diese Weise wird es also weiterhin automatisiert und ohne größeres Zutun ermöglicht, das Mobiltelefon zu nutzen, um beispielsweise Telefonanrufe über Bedienelemente des Kraftfahrzeugs herzustellen und durchzuführen. Hierzu ist die erste Kommunikationsverbindung vorgesehen, welche bevorzugt als eine Bluetooth-Verbindung ausgebildet sein kann. Die erste Kommunikationsverbindung kann also vorzugsweise eingesetzt werden, um den Aufbau eines Telefongesprächs über das Kraftfahrzeug zu ermöglichen. Diese Funktionalitäten, die nicht mit dem Austausch insbesondere privater Nutzdaten verbunden sind, stehen dem Fahrer des Kraftfahrzeugs mithin weiterhin, wie grundsätzlich bekannt, zur Verfügung. Er kann sich nun jedoch sicher sein, dass zumindest der Teil der Nutzdaten, der nur über die zweite Kommunikationsverbindung an das Kraftfahrzeug übertragbar ist, nur durch eine bewusste Handlung tatsächlich übertragen werden kann, nämlich, indem er sein Mobiltelefon durch eine gezielte Handlung in den Kommunikationsbereich der durch eine fahrzeugseitige Kommunikationseinrichtung realisierten NFC-Schnittstelle bringt. Auf diese Weise wird dem Fahrer eine deutlich verbesserte Kontrolle bezüglich der Übertragung seiner Nutzdaten gegeben. Der Fahrer kann selbst entscheiden, ob und insbesondere, wie im Folgenden noch beschrieben wird, welche Nutzdaten im Kraftfahrzeug nutzbar sind.

Insgesamt bietet das erfindungsgemäße Vorgehen also die Verwendung zweier auf ihre dedizierten Zweckbestimmungen abgestimmten Kommunikationsverbindungen, von denen die eine letztlich einem nicht-fahrerspezifischen Datenaustausch, insbesondere der Telefonie, zugeordnet ist, während die andere, die eine bewusste Handlung zum Aufbau und zur Datenübertragung erfordert, fahrerspezifischen Inhalten zugeordnet werden kann. Dabei sei darauf hingewiesen, dass insbesondere in einer Ausgestaltung, in der das bloße Eintreten des Mobiltelefons in den Kommunikationsbereich, der den Aufbau der zweiten Kommunikationsverbindung ermöglicht, bereits ausreichend ist, um den Datentransfer zu initialisieren, mithin auch diesbezüglich eine äußerst einfache, wenig Aufwand seitens des Nutzers erfordernde Übertragungsmöglichkeit gegeben ist, die dennoch eine gezielte Handlung benötigt.

Erfindungsgemäß ist vorgesehen, dass auf dem Mobiltelefon, insbesondere im Rahmen einer Applikation, eine Benutzeroberfläche zur Auswahl von ausschließlich über die zweite Kommunikationsverbindung übertragbaren Nutzdaten angezeigt wird, wobei nur die über die Benutzeroberfläche ausgewählten Nutzdaten an das Kraftfahrzeug übertragen werden. Auf diese Weise wird eine Applikation verwendet, über die der Fahrer selbst bestimmen kann, welche Informationen, also Nutzdaten, mit dem Kraftfahrzeug synchronisiert werden sollen, mithin an das Kraftfahrzeug übertragen werden sollen. Auch entfernt vom Kraftfahrzeug selber ermöglicht die beschriebene Applikation eine beliebig genaue Auswahl von Nutzdaten, die zur Verwendung im Kraftfahrzeug freigegeben werden und dann übertragen werden, wenn die zweite Kommunikationsverbindung hergestellt wird. Während eine Grobauswahl nach Kategorie, beispielsweise Termine, Kontakte, Adressen und dergleichen, erfolgen kann, ist es auch möglich, für jeden einzelnen Datensatz eine Auswahl zu erlauben, so dass beispielsweise bestimmte Kontakte, insbesondere Geschäftskontakte, an das Kraftfahrzeug übertragen werden können, andere, beispielsweise Privatkontakte, jedoch nicht. Auf für den Benutzer leicht durchschaubare Art bestimmt dieser die Wechselwirkung mit dem Kraftfahrzeug, was die Nutzdaten angeht.

Zweckmäßig kann es sein, wenn wenigstens ein Teil der Nutzdaten von einer Auswertungsapplikation des Mobiltelefons ermittelt werden. Es ist mithin denkbar, dass eine Auswertungsapplikation auf dem Mobiltelefon vorgesehen ist, die verschiedene, durch das Mobiltelefon erfassbare Daten zu Nutzdaten auswertet, die später im Kraftfahrzeug für wenigstens ein Kraftfahrzeugsystem nützlich sind. Dies können Daten über typische Verhaltensweisen des Besitzers des Mobiltelefons sein, die auch für dessen Fahrtätigkeit relevant sind. Beispielsweise können, über einen GPS-Sensor nachverfolgt, verschiedene Orte, an denen ein Kraftfahrzeug parkt, einem einzigen letztendlichen Zielort zugeordnet werden; zudem kann über die Parkgewohnheiten des Fahrers, beispielsweise, ob dieser gerne längere Wege in Kauf nimmt und wo diese entlangführen, eine statistische Auswertung erfolgen. Selbstverständlich sind auch Auswertungsapplikationen denkbar, die Eingaben eines Benutzers nachverfolgen und aus diesen weitere Nutzdaten, die im Betrieb des Kraftfahrzeugs dienlich sein können, schlussfolgert, beispielsweise bezüglich dessen Terminplanung und dergleichen.

Vorzugsweise können die Nutzdaten zur Ergänzung eines in dem Kraftfahrzeug gespeicherten Fahrerprofils verwendet werden. Es wurden bereits Kraftfahrzeuge vorgeschlagen, in denen auf verschiedenste Arten eine Identifikation des Fahrers vorgenommen werden kann, beispielsweise über dessen Fahrstil oder eine bestimmte Identifikationsvorrichtung bzw. einen personalisierten Schlüssel, so dass beispielsweise Fahrzeugsysteme anhand des Fahrerprofils konfiguriert werden können. Die Nutzdaten können, zumindest wenigstens teilweise, geeignet sein, das Fahrerprofil so zu ergänzen, dass eine bessere Individualisierung des Betriebs des Kraftfahrzeugs im Hinblick auf einen bestimmten Fahrer erfolgen kann. Dies gilt insbesondere dann, worauf im Folgenden noch näher eingegangen werden wird, wenn Fahrzeugsysteme im Hinblick auf häufige Fahrziele, Termine und dergleichen betrieben werden, doch auch bevorzugte Gesprächspartner und dergleichen können aus Nutzerdaten abgeleitet werden. Aus Aktivitäten des Fahrers, die beispielsweise durch eine Auswertungsapplikation als Nutzdaten ermittelt wurden, kann auch auf den Fahrertyp rückgeschlossen werden, insbesondere in Datenfusionen mit von dem Kraftfahrzeug selbst ermittelten Daten. Verschiedenste Möglichkeiten sind hier denkbar.

Wie bereits angesprochen wurde, können die Nutzdaten beim Betrieb wenigstens eines Fahrzeugsystems genutzt werden. Zu nennen sind als Beispiele, wie bereits oben diskutiert, eine Freisprecheinrichtung oder allgemein eine Telefonierapplikation, vorteilhaft denkbar ist im Rahmen der vorliegenden Erfindung jedoch auch die Nutzung in einem Navigationssystems. Aber auch Infotainmentsysteme können auf einem Mobiltelefon gespeicherte fahrerspezifische Nutzdaten, beispielsweise bevorzugte Radiosender, Musik und dergleichen, nutzen, um die Individualisierung des Kraftfahrzeugs hin auf den speziellen Fahrer zu verbessern, insbesondere, wenn, wie zuvor dargelegt wurde, auch eine Identifizierung des Fahrers stattfindet, dem dann ein Fahrerprofil zugeordnet ist.

Als Nutzdaten können beispielsweise Kontaktdaten, insbesondere umfassend Adressen und/oder Telefonnummern, und/oder Termindaten und/oder Aufenthaltsorte des Nutzers des Mobiltelefons und/oder Daten über die Benutzung des Mobiltelefons verwendet werden.

In einer besonders vorteilhaften Ausgestaltung der vorliegenden Erfindung, die grundsätzlich auch unabhängig von der Verwendung der zweiten Kommunikationsverbindung vorteilhaft nutzbar wäre, können die Nutzdaten, insbesondere die zuvor genannten Beispiele, beim Betrieb eines Navigationssystems des Kraftfahrzeugs verwendet werden. Gerade im Hinblick auf die Navigation enthält ein Mobiltelefon eine Vielzahl von fahrerspezifischen Informationen, die bei verschiedensten Vorgängen im Navigationssystem von Nutzen sein können. Damit wird ein einfacherer und auf den Fahrer besonders zugeschnittener Betrieb des Navigationssystems ermöglicht.

So kann beispielsweise vorgesehen sein, dass wenigstens ein Teil der Nutzdaten, insbesondere Termindaten und/oder Kontaktdaten, zur Ermittlung eines Zielorts verwendet werden. Als Nutzdaten können also insbesondere Termine und/oder Kontakte über die zweite Kommunikationsverbindung an das Kraftfahrzeug übertragen werden, wobei diese zur Ermittlung eines Zielorts verwendet werden können. Zwar mag es zum einen denkbar sein, dass die Nutzdaten zur Unterstützung des Fahrers zur Auswahl eines Zielortes eingesetzt werden, den der Fahrer dann nicht mehr umständlich eingeben muss, möglich ist es aber auch, dass eine automatische, von einer Bedienerinteraktion weitgehend unabhängige Auswertung der Nutzdaten, insbesondere bei Termindaten, dahingehend erfolgt, dass ein wahrscheinlichster Zielort des Fahrers ermittelt wird. Wurde beispielsweise ein in der nahen Zukunft liegender Termin mit zugehöriger Adresse als Nutzdaten übertragen, ist es sehr wahrscheinlich, dass der Fahrer nun zu diesem Termin aufbrechen wird, so dass die Adresse des Termins sehr wahrscheinlich sein Zielort ist.

Dabei kann eine aktive Führung an den insbesondere durch den Fahrer bestätigten und/oder unter mehreren ermittelten Zielorten ausgewählten Zielort durch das Navigationssystem erfolgen. Wie bereits dargelegt, ist es möglich, den wenigstens einen wahrscheinlichsten Zielort automatisch zu ermitteln und dem Fahrer zu präsentieren, so dass er bestätigt werden kann bzw. der Fahrer aus einer Liste wahrscheinlichster Zielorte den korrekten Zielort auswählen kann. Ist dieser optionale Schritt geschehen, kann eine grundsätzlich bekannte, aktive Navigation an den Zielort erfolgen, das bedeutet, das Navigationssystem gibt dem Fahrer, wie im Stand der Technik bekannt, Fahranweisungen, um das Ziel zu erreichen. Dabei sei an dieser Stelle nochmals darauf hingewiesen, dass durch die Verwendung der zweiten Kommunikationsverbindung der Fahrer die zur Auswahl des Zielorts führenden Informationen nicht zwangsläufig mit dem Kraftfahrzeug teilen muss, dies jedoch durch eine gezielte Handlung jederzeit auf einfache Weise tun kann, so dass die Nutzdaten dem Navigationssystem unmittelbar zur Verfügung stehen.

In einer besonders vorteilhaften, bevorzugten Ausgestaltung der vorliegenden Erfindung kann vorgesehen sein, dass für wenigstens einen wahrscheinlichst angesteuerten Zielort als passive Navigation Informationen über Verkehrshindernisse auf der Strecke zu dem Zielort ermittelt und ausgegeben werden. Auch die Ausgabe eines Ausweichroutenvorschlags ist denkbar. Das Navigationssystem nutzt also wiederum die Nutzdaten, um einen wahrscheinlichsten Zielort, an den der Fahrer zu fahren gedenkt, schlusszufolgern, wobei der Fahrer in diesem Fall das Navigationssystem jedoch nicht zur aktiven Führung an den Zielort aktiviert, sondern ohne Navigationssystem fährt. Dabei sei an dieser Stelle noch angemerkt, dass es selbstverständlich denkbar ist, die Berechnung des wahrscheinlichsten Zielorts zyklisch durchzuführen, wobei auch die aktuelle Position des Kraftfahrzeugs und Daten über die bisherige Fahrt selbstverständlich zweckmäßigerweise berücksichtigt werden können. Denn bereits aus der Richtung, in die sich ein Kraftfahrzeug beim Losfahren fortbewegt, können erste Rückschlüsse auf möglicherweise angesteuerte Zielorte gezogen werden.

Das Navigationssystem überprüft nun die Verkehrssituation auf dem Weg zu dem wahrscheinlichsten Zielort, wobei selbstverständlich auch mehrere wahrscheinlichste Zielorte denkbar sind, für die die Verkehrssituation überprüft werden kann. Wird festgestellt, dass Verkehrshindernisse existieren, kann das Navigationssystem dem Fahrer, trotzdem er es nicht zur aktiven Navigation nutzt, Hinweise auf diese und gegebenenfalls sogar Vorschläge zur Lösung der sich ergebenden Problematiken, beispielsweise Ausweichrouten, geben. In dieser Ausgestaltungsform überwacht das Navigationssystem also unauffällig, ohne den Fahrer zu stören, dessen Fahrtätigkeit und greift nur dann mit Informationen ein, wenn sich beispielsweise unerwartete Änderungen im Verkehrsgeschehen, sonstige Verkehrshindernisse und dergleichen ergeben. Auf diese Weise können also auch bei passiver Routenführung Informationen zu Verkehrshindernissen auf der wahrscheinlich befahrenen Strecke erhalten werden.

Eine weitere zweckmäßige Ausgestaltung sieht vor, dass bei der Ermittlung des Zielorts auch Daten über vergangene Fahrten des Fahrers im Kraftfahrzeug genutzt werden. Durch eine Auswertung solcher Daten über vergangene Fahrten kann letztlich ein Gewohnheitsprofil für die Fahrten des Fahrers erstellt werden. Ist beispielsweise bekannt, dass der Fahrer jeden Werktag zu seinem Arbeitsplatz fährt, besteht eine große Wahrscheinlichkeit, dass er dies auch an einem neuen Werktag wieder tun wird, falls nicht beispielsweise in den Nutzdaten enthaltene Termine oder sonstige Kalendereinträge ("Urlaub") auf Sonstiges hinweisen. Auch kann durch die Auswertung vergangener Fahrten gelernt werden, welche Fahrtstrecken ein Nutzer des Kraftfahrzeugs bevorzugt und wahrscheinlich auch bei einer aktuellen Fahrt wählen wird. Mithin stellen Daten über vergangene Fahrten ein gutes Mittel dar, um die Qualität der Navigation durch das Navigationssystem weiter zu verbessern, hier im Hinblick auf die Ermittlung des Zielorts.

In Weiterbildung des Verfahrens ist es ferner vorteilhaft, wenn zusätzlich zu dem Zielort auch ein in der Zukunft liegender Zeitpunkt der Fahrt und eine Zeitdauer der Fahrt ermittelt werden, wobei bei einer einen Schwellwert überschreitenden Verlängerung der Fahrt das Kraftfahrzeug eine diesbezügliche Benachrichtigung an den Benutzer schickt. Eine derartige Ausgestaltung ist insbesondere dann zweckmäßig, wenn das Navigationssystem nicht nur den unmittelbar nächsten Zielort zu ermitteln sucht, sondern auch bereits durch Auswertung der Nutzdaten, insbesondere im Hinblick auf Termine, in die Zukunft prognostiziert, beispielsweise, dass am nächsten Werktag aufgrund von Terminen zu einer bestimmten Zeit wieder zum Arbeitsplatz aufgebrochen wird. Stellt das Kraftfahrzeug nun im Vorfeld der Betriebsaufnahme, um zu diesem Zielort zu fahren, fest, dass ein Problem aufgrund der Verkehrssituation vorliegt, welches voraussichtlich auch noch bis zum Fahrtantritt bzw. zum prognostizierten Passieren der Problemstelle bestehen bleibt, kann dem Fahrer eine diesbezügliche Benachrichtigung zugekommen werden, beispielsweise über eine SMS oder eine E-Mail. Eine Information des Fahrers durch Benachrichtigung kann vorteilhaft auch über eine Smartphone-App(lication) vorgenommen werden; auch sogenannte Instant Messenger und soziale Netzwerke können zur Zustellung der Benachrichtigung genutzt werden. Der Fahrer kann im Zweifel früher aufbrechen, um seine Termine noch einhalten zu können.

Ein weiteres vorteilhaftes Anwendungsgebiet der Nutzdaten für ein Navigationssystem ist, wenn es um die Parkplatzsuche geht. So kann vorgesehen sein, dass wenigstens ein Teil der Nutzdaten zur Ermittlung eines geeigneten Parkplatzes genutzt werden. Weist das Navigationssystem die zusätzliche Funktionalität auf, auch einen geeigneten Parkplatz für den Fahrer aufzufinden, können dabei Nutzdaten aus einem Mobiltelefon Informationen liefern. Insbesondere bietet es sich hier an, eine Auswertungsapplikation zu verwenden, die weitere Bewegungseigenschaften außerhalb des Kraftfahrzeugs nachvollzieht, so dass beispielsweise festgestellt werden kann, ob ein Fahrer gerne einen Park durchquert, nachdem er geparkt hat, oder eine Schaufensterzeile entlanggeht. Auch kann geschlussfolgert werden, wie weit ein Fahrer meist läuft, nachdem er das Kraftfahrzeug abgestellt hat und dergleichen. Termindaten können genutzt werden, um festzustellen, wie weit ein Parkplatz maximal vom Ort eines angesteuerten Termins entfernt sein kann und dergleichen. Ersichtlich liegen auch bezüglich des Auffindens eines Parkplatzes eine Vielzahl von Möglichkeiten vor, Nutzdaten im Navigationssystem einzusetzen.

Eine weitere Verbesserung des Zusammenspiels zwischen dem Navigationssystem und dem Mobiltelefon ergibt sich, wenn vorgesehen wird, dass Navigationsdaten von dem Navigationssystem zurück an das Mobiltelefon übertragen und dort zur weiteren Führung des Fahrers nach Beendigung der Fahrt benutzt werden. Ist beispielsweise ein Zielort nicht unmittelbar mit dem Kraftfahrzeug erreichbar, sondern muss dieses beispielsweise auf einem entfernten Parkplatz abgestellt werden, können für das Mobiltelefon notwendige Daten, um den Fahrer weiter zu navigieren, wenn er seinen Fußweg zum Zielort antritt, an das Mobiltelefon übertragen und dort entsprechend verwendet werden. Dies erhöht die Synergie weiterhin und senkt den Bedienaufwand für einen Benutzer deutlich, nachdem das Ziel nicht im Mobiltelefon erneut eingegeben werden muss, sondern unmittelbar vom Kraftfahrzeug weiterverwendet wird. Zur Übertragung dieser Daten kann zweckmäßigerweise die erste Kommunikationsverbindung verwendet werden.

Es sei nochmals darauf hingewiesen, dass eine Nutzung von von einem Mobiltelefon übertragenen Nutzdaten in einem Navigationssystem, insbesondere von Termindaten oder dergleichen, auch alleinstehend zweckmäßig ist, das bedeutet, unabhängig von der zweiten Kommunikationsverbindung nach dem NFC-Standard.

In vorteilhafter Weiterbildung des erfindungsgemäßen Verfahrens kann zur Übertragung der Nutzdaten über die zweite Kommunikationsverbindung eine Ankopplungsvorrichtung in dem Kraftfahrzeug verwendet werden, welche insbesondere ein Halten des Mobiltelefons in einer Übertragungsposition durch eine Person erfordert. Die Ankopplungsvorrichtung ist Teil einer geeigneten Kommunikationseinrichtung zur Herstellung der zweiten Kommunikationsverbindung. Bevorzugt ist die Ankopplungsvorrichtung dabei so angeordnet, dass es nicht "aus Versehen" zu einer Übertragung von Nutzdaten über die zweite Kommunikationsverbindung kommen kann, beispielsweise durch Ablegen des Mobiltelefons in einer dafür vorgesehenen Ablage oder dergleichen. Insbesondere dann, wenn das Mobiltelefon in Kommunikationsreichweite vor die Ankopplungsvorrichtung gehalten werden muss, ist dies im Wesentlichen ausgeschlossen und es ist verstärkt sichergestellt, dass es sich um einen bewussten Vorgang handelt, die Nutzdaten über die zweite Kommunikationsverbindung zu übertragen. Beispielsweise kann die Ankopplungsvorrichtung, symbolisiert beispielsweise über eine Ankopplungsfläche, im Bereich einer Mittelkonsole, beispielsweise nah einem Mensch-Maschine-Interface, angeordnet und entsprechend gekennzeichnet sein. Grundsätzlich ist es jedoch auch denkbar, eine Ankopplungsvorrichtung zu verwenden, an der das Mobiltelefon in eine vorgesehene Halterung kurzzeitig eingelegt werden kann, um die Nutzdaten zu übertragen, welche aber dann entsprechend gekennzeichnet ist und nicht einem üblichen Ablageort für ein Mobiltelefon in einem Kraftfahrzeug entspricht.

Neben dem Verfahren betrifft die Erfindung auch ein Kraftfahrzeug, umfassend wenigstens eine Kommunikationseinrichtung zur Herstellung einer ersten Kommunikationsverbindung, die einem nicht-fahrerspezifischen Datenaustausch zugeordnet ist, von einem Mobiltelefon zu einem Kraftfahrzeug, wobei die oder eine weitere Kommunikationseinrichtung zur Herstellung einer zweiten Kommunikationsverbindung nach dem NFC-Standard zur Übertragung benutzerseitig und über eine mobiltelefonseitige Benutzeroberfläche ausgewählter fahrerspezifischer Nutzdaten, die ausschließlich über die zweite Kommunikationsverbindung übertragbar sind, von dem Mobiltelefon an das Kraftfahrzeug ausgebildet ist. Das erfindungsgemäße Kraftfahrzeug ist also geeignet, das erfindungsgemäße Verfahren durchzuführen, so dass sich sämtliche Ausführungen bezüglich des erfindungsgemäßen Verfahrens analog auf das erfindungsgemäße Kraftfahrzeug übertragen lassen und auch mit diesem die Vorteile der vorliegenden Erfindung erhalten werden können. Es ermöglicht also, nicht nur eine erste, langreichweitigere Kommunikationsverbindung zu dem Mobiltelefon aufzubauen, sondern für wenigstens einen Teil der zu übertragenden Nutzdaten eine zweite Kommunikationsverbindung herzustellen, die deutlich kurzreichweitiger ist, insbesondere eine Reichweite von kleiner oder gleich 4 cm aufweist, und mithin insbesondere dem NFC-Standard genügt.

In weiterer Ausgestaltung des erfindungsgemäßen Kraftfahrzeugs kann vorgesehen sein, dass die Kommunikationseinrichtung eine Ankopplungsvorrichtung zur Herstellung der zweiten Kommunikationsverbindung umfasst, welche insbesondere ein Halten des Mobiltelefons durch eine Person in eine Übertragungsposition erfordert. Wie bereits oben dargelegt wurde, vermeidet eine solche Ausgestaltung idealerweise das versehentliche Übertragen von Nutzdaten und sieht dies als eine bewusste, vom Fahrer gezielt vorzunehmende Handlung vor.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug,
- Fig. 2: eine Ansicht der Mittelkonsole des Kraftfahrzeugs aus Fig. 1, und
- Fig. 3: eine Ansicht der sich ergebenden Kommunikationsverbindungen.

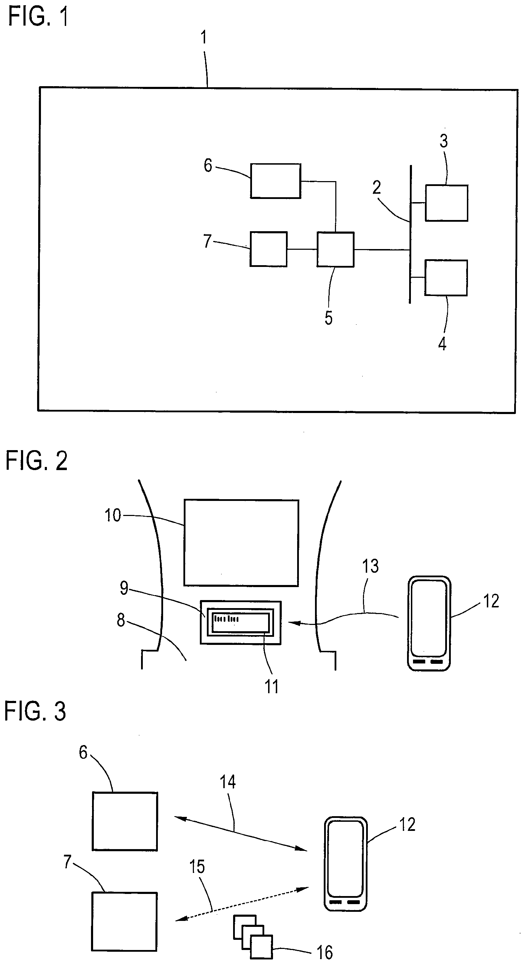

Fig. 1 zeigt eine Prinzipskizze eines erfindungsgemäßen Kraftfahrzeugs 1. Dieses weist wie grundsätzlich bekannt ein Bussystem 2 auf, an das verschiedene Fahrzeugsysteme angeschlossen sind, von denen wie beispielhaft ein Navigationssystem 3 und eine Freisprecheinrichtung 4 gezeigt sind. Sowohl das Navigationssystem 3 als auch die Freisprecheinrichtung 4 nutzen von einem Mobiltelefon übertragene Nutzdaten, wobei vorliegend ein spezielles Steuergerät 5 die Kommunikation mit dem Mobiltelefon steuert, welche vorliegend über zwei Kommunikationseinrichtungen 6, 7 erfolgt. Dabei dient die Kommunikationseinrichtung 6, wie im Folgenden noch genauer beschrieben werden wird, zur Herstellung einer ersten, langreichweitigeren Kommunikationsverbindung, vorliegend einer Bluetooth-Verbindung. Die Bluetooth-Kommunikationsverbindung wird mit jedem Mobiltelefon, dessen Bluetooth-Schnittstelle aktiviert ist, automatisch hergestellt und dient insbesondere für die Freisprecheinrichtung 4 dazu, Telefongespräche über das Kraftfahrzeug 1 gesteuert durch das Mobiltelefon zu realisieren.

Die zweite Kommunikationseinrichtung 7, wobei die Kommunikationseinrichtungen 6 und 7 auch in Baueinheit realisiert werden können, dient zum Aufbau einer äußerst kurzreichweitigen zweiten Kommunikationsverbindung, vorliegend einer Verbindung nach dem NFC-Standard mit einer Reichweite von bis zu 4 cm. Über diese zweite Kommunikationsverbindung sollen fahrerspezifische Nutzdaten von dem Mobiltelefon an das Kraftfahrzeug 1 übertragen werden, wo sie von dessen Fahrzeugsystemen, insbesondere dem Navigationssystem 3 und der Freisprecheinrichtung 4, genutzt werden können.

Fig. 2 zeigt an der Mittelkonsole 8 des Kraftfahrzeugs 1 eine Ankopplungsvorrichtung 9 als Teil der zweiten Kommunikationseinrichtung 7, wobei die Ankopplungsvorrichtung 9 vorliegend unterhalb eines Mensch-Maschine-Interface 10 des Kraftfahrzeugs 1 vorgesehen ist. Sie erscheint für den Benutzer als eine ebene, im Wesentlichen rechteckige Fläche, auf der eine symbolische Darstellung 11 eines Mobiltelefons gezeigt ist. Um die zweite Kommunikationsverbindung herstellen zu können, muss ein Mobiltelefon 12 in die unmittelbare Nähe der Ankopplungsvorrichtung 9 gehalten werden, wie durch den Pfeil 13 angedeutet. Hierzu ist es notwendig, dass das Mobiltelefon 12 an die Ankopplungsvorrichtung 9 angehalten wird, was eine bewusste, zielgerichtete Handlung darstellt, so dass nicht versehentlich Nutzdaten übertragen werden können. Nachdem aufgrund der Lage der Ankopplungsvorrichtung 9 ein versehentliches Ablegen des Mobiltelefons 12 ohnehin unwahrscheinlich ist, kann auch ein Halter zum kurzzeitigen Ablegen des Mobiltelefons 12 zum Übertragen der Nutzdaten dort vorgesehen werden.

Die konkrete Kommunikationsstruktur, welche durch das erfindungsgemäße Verfahren mit dem erfindungsgemäßen Kraftfahrzeug 1 erreicht werden kann, ist durch Fig. 3 näher dargestellt. Ersichtlich existiert eine erste Kommunikationsverbindung 14 zwischen dem Mobiltelefon 12 und der ersten Kommunikationseinrichtung 6, welche als Bluetooth-Verbindung ausgebildet ist und hauptsächlich dem Austausch von Steuerdaten zur Nutzung des Kraftfahrzeugs zum Telefonieren oder für sonstige Dienste dient. Fahrerspezifische Nutzdaten werden nicht über die erste Kommunikationsverbindung 14 übertragen. Hierfür ist die nur bei geeigneter Positionierung des Mobiltelefons 12 existierende zweite Kommunikationsverbindung 15 vorgesehen, die zwischen dem Mobiltelefon 12 und der zweiten Kommunikationseinrichtung 7 aufgebaut wird. Über diese können Nutzdaten 16 übertragen werden, die dann beispielsweise als Teil eines Fahrerprofils dieses ergänzen können und durch Fahrzeugsysteme genutzt werden können.

Im hier dargestellten Ausführungsbeispiel entscheidet der Fahrer dabei durch Herstellen der zweiten Kommunikationsverbindung 15 nicht nur bewusst, dass Nutzdaten 16 übertragen werden sollen, sondern auch, welche. Hierfür ist als Teil einer Applikation auf dem Mobiltelefon 12 eine Benutzeroberfläche darstellbar, welche es dem Benutzer des Mobiltelefons 12 erlaubt, auszuwählen, welche Nutzdaten über die zweite Kommunikationsverbindung 15 an das Kraftfahrzeug 1 übertragen werden sollen. Dabei kann der Benutzer sowohl Kategorien wie auch einzelne Datensätze auswählen.

Über die zweite Kommunikationsverbindung 15 übertragbare Nutzdaten 16 können verschiedenster Art sein, wenn sie nur nützlich innerhalb wenigstens eines Fahrzeugsystems angewendet werden können. So können die Nutzdaten 16 beispielsweise Kontaktdaten umfassen, welche zum Aufbau von Telefongesprächen, initiiert durch eine Bedienhandlung im Kraftfahrzeug 1, dienen können. Kontaktdaten, insbesondere deren Adressen, und Termindaten erweisen sich als wichtige Nutzdaten zur Verwendung durch das Navigationssystem 3, worauf im Folgenden noch näher eingegangen werden wird. Neben letztlich vom Benutzer selbst eingegebenen Nutzdaten kann in dem Mobiltelefon 12 auch eine Auswertungsapplikation vorgesehen sein, die selbst Nutzdaten 16 erzeugt, beispielsweise eine Wege des Benutzers angebende Positionsdatenliste oder sonstige Daten, die das Verhalten des Benutzers beschreiben, beispielsweise dessen Wege, nachdem das Kraftfahrzeug 1 abgestellt wurde, woraus auf Parkgewohnheiten und optimale Parkplätze für den Benutzer gefolgert werden kann. Für alle diese Nutzdaten 16, wobei selbstverständlich auch weitere Nutzdaten 16 denkbar sind, hat der Benutzer aufgrund der Benutzeroberfläche die Auswahl, ob er sie über die zweite Kommunikationsverbindung 15 übertragen möchte, und er leitet diese Übertragung ein, indem er das Mobiltelefon 12 der Ankopplungsvorrichtung 9 annähert.

Wie bereits erwähnt wurde, können Nutzdaten 16 besonders vorteilhaft beim Betrieb des Navigationssystems 3 verwendet werden, insbesondere Kontaktdaten und Termindaten. Diese ermöglichen es dem Navigationssystem 3, wenigstens einen wahrscheinlichsten Zielort des Fahrers während einer Fahrt ermitteln zu können. Die wahrscheinlichsten Zielorte können als Liste in dem Navigationssystem 3 erzeugt und angezeigt werden, so dass der Fahrer einen Zielort auswählen kann, wenn er eine aktive Führung durch das Navigationssystem 3 wünscht. Wurde nur ein wahrscheinlichster Zielort bestimmt, kann der Fahrer diesen zur aktiven Führung durch das Navigationssystem 3 bestätigen. Jedoch ermöglicht eine solche Auswertung von Nutzdaten durch das Navigationssystem 3 auch eine passive Routenführung, wenn für den wenigstens einen wahrscheinlichsten Zielort, der dennoch bestimmt wird, auch wenn der Fahrer keine aktive Führung wünscht, festgestellt wird, ob auf dem Weg Verkehrshindernisse oder sonstige Störungen vorliegen. Ist dies der Fall, kann das Navigationssystem 3 dennoch einen Hinweis und entsprechend gegebenenfalls weiterführende Informationen, beispielsweise eine Ausweichroute, ausgeben, um die Unterstützung des Fahrers auch für einen solchen Fall zu verbessern.

Das Navigationssystem 3 verwendet bei der insbesondere zyklischen Ermittlung des wahrscheinlichsten Zielortes auch weitere Daten, insbesondere Daten zu der aktuellen Fahrt, die die bereits zurückgelegte Strecke beschreiben, aber auch Daten vergangener Fahrten, aus denen Gewohnheitsmuster abgeleitet werden können, insbesondere Fahrten, die regelmäßig vorgenommen werden. Werden diese mit Termindaten verknüpft, kann eine gute Prognose abgegeben werden, im Übrigen auch für die Zukunft. Werden Zeitpunkte für wahrscheinliche Fahrten bestimmt, beispielsweise anhand eines bestimmten Termins, kann auch ständig überwacht werden, inwieweit Verkehrshindernisse ein pünktliches Erscheinen vermeiden würden, und der Fahrer kann, beispielsweise über eine SMS oder dergleichen, vom Kraftfahrzeug 1 informiert werden. Zusätzlich oder alternativ denkbar ist auch die Benachrichtigung über eine Smartphone-App, ein soziales Netzwerk oder einen Instant-Messenger.

Kontaktdaten umfassen häufig Adressen, so dass insbesondere durch Verknüpfung mit Termindaten auch unter ihrer Nutzung verbessert Zielorte prognostiziert werden können.

Doch Nutzdaten können auch anderweitig durch das Navigationssystem 3 eingesetzt werden, beispielsweise, wenn das Navigationssystem 3 auch optimale Parkplätze für den Nutzer, also den Fahrer, auswählt, um dorthin zu navigieren. Vorlieben des Fahrers, die sich aus den oben beschriebenen Nutzerdaten ergeben, beispielsweise, lieber den Weg durch einen Park zu wählen als entlang von Schaufensterscheiben, können berücksichtigt werden.

Ist ein Parkplatz gefunden, werden die verbleibenden Daten zum Erreichen des Zielortes an das Mobiltelefon 12 übertragen, so dass die Navigation zum Zielort nach Beendigung der Fahrt dort fortgesetzt werden kann. Auch ist es vorteilhaft, wenn der Abstellplatz bzw. allgemein die Position des Kraftfahrzeugs 1 an das Mobiltelefon 12 übertragen und dort gespeichert werden, da dann eine Rücknavigation zu dem Kraftfahrzeug 1 mittels des Mobiltelefons 12 erreicht werden kann. Auf diese Weise wird der Fahrer also auch außerhalb des Kraftfahrzeugs 1 vollständig geführt bzw. navigiert.

## Patentansprüche

1. Verfahren zur Datenübermittlung zwischen einem Mobiltelefon (12) und einem Kraftfahrzeug (1), wobei eine erste drahtlose Kommunikationsverbindung (14), die einem nicht-fahrerspezifischen Datenaustausch, umfassend den Austausch von Steuerdaten zur Nutzung des Kraftfahrzeugs (1) zum Telefonieren oder für sonstige Dienste, zugeordnet ist, zwischen dem Mobiltelefon (12) und dem Kraftfahrzeug (1) bei entsprechend aktivierter Kommunikationsschnittstelle des Mobiltelefons (12) automatisch hergestellt wird und wobei fahrerspezifische Nutzdaten (16) von dem Mobiltelefon (12) an das Kraftfahrzeug (1) übertragen werden, **dadurch gekennzeichnet,**
**dass** die fahrerspezifischen Nutzdaten (16) ausschließlich über eine zweite Kommunikationsverbindung (15) nach dem NFC-Standard an das Kraftfahrzeug (1) übertragen werden, wobei auf dem Mobiltelefon (12) eine Benutzeroberfläche zur Auswahl von zu übertragenden Nutzdaten (16) aus ausschließlich über die zweite Kommunikationsverbindung (15) übertragbaren Nutzdaten (16) angezeigt wird, wobei nur die über die Benutzeroberfläche ausgewählten Nutzdaten (16) über die zweite Kommunikationsverbindung (15) an das Kraftfahrzeug (1) übertragen werden, so dass zwei auf ihre dedizierten Zweckbestimmungen abgestimmte Kommunikationsverbindungen (14, 15) verwendet werden, von denen die eine einem nicht-fahrerspezifischen Datenaustausch zugeordnet ist, während die andere, die eine bewusste Handlung zum Aufbau und zur Datenübertragung erfordert, den ausgewählten fahrerspezifischen Nutzdaten zugeordnet ist.

2. Verfahren nach Anspruch 1,
wobei als erste Kommunikationsverbindung (14) eine Bluetooth-Verbindung verwendet wird und/oder die erste Kommunikationsverbindung (14) zum Aufbau eines Telefongesprächs über das Kraftfahrzeug (1) genutzt wird.

3. Verfahren nach einem der vorangehenden Ansprüche,
wobei wenigstens ein Teil der Nutzdaten (16) von einer Auswertungsapplikation des Mobiltelefons (12) ermittelt werden.

4. Verfahren nach einem der vorangehenden Ansprüche,
wobei Nutzdaten (16) zur Ergänzung eines in dem Kraftfahrzeug (1) gespeicherten Fahrerprofils verwendet werden.

5. Verfahren nach einem der vorangehenden Ansprüche,
wobei die Nutzdaten (16) beim Betrieb wenigstens eines Fahrzeugsystems genutzt werden.

6. Verfahren nach einem der vorangehenden Ansprüche,
wobei als Nutzdaten (16) Kontaktdaten, insbesondere umfassend Adressen und/oder Telefonnummern, und/oder Termindaten und/oder Aufenthaltsorte des Nutzers des Mobiltelefons (12) und/oder Daten über die Benutzung des Mobiltelefons (12) verwendet werden.

7. Verfahren nach einem der vorangehenden Ansprüche,
wobei die Nutzdaten (16), insbesondere gemäß Anspruch 7, beim Betrieb eines Navigationssystems (3) des Kraftfahrzeugs (1) verwendet werden.

8. Verfahren nach Anspruch 7,
wobei dass wenigstens ein Teil der Nutzdaten (16), insbesondere Termindaten und/oder Kontaktdaten, zur Ermittlung eines Zielorts verwendet werden.

9. Verfahren nach Anspruch 8,
wobei eine aktive Führung an den insbesondere durch den Fahrer bestätigten und/oder unter mehreren ermittelten Zielorten ausgewählten Zielort durch das Navigationssystem (3) erfolgt.

10. Verfahren nach Anspruch 8,
wobei für wenigstens einen wahrscheinlichst angesteuerten Zielort als passive Navigation Informationen über Verkehrshindernisse auf der Strecke zu dem Zielort ermittelt und ausgegeben werden.

11. Verfahren nach einem der Ansprüche 8 bis 10,
wobei bei der Ermittlung des Zielorts auch Daten über vergangene Fahrten des Fahrers im Kraftfahrzeug (1) genutzt werden.

12. Verfahren nach einem der Ansprüche 8 bis 11,
wobei zusätzlich zu dem Zielort auch ein in der Zukunft liegender Zeitpunkt der Fahrt und eine Zeitdauer der Fahrt ermittelt werden, wobei bei einer einen Schwellwert überschreitenden Verlängerung der Fahrt das Kraftfahrzeug (1) eine diesbezügliche Benachrichtigung an den Benutzer schickt.

13. Verfahren nach einem der Ansprüche 7 bis 12,
wobei wenigstens ein Teil der Nutzdaten (16) zur Ermittlung eines geeigneten Parkplatzes genutzt werden.

14. Verfahren nach einem der Ansprüche 7 bis 13,
wobei Navigationsdaten von dem Navigationssystem (3) an das Mobiltelefon (12) übertragen und dort zur weiteren Führung des Fahrers nach Beendigung der Fahrt benutzt werden.

15. Verfahren nach einem der vorangehenden Ansprüche,
wobei zur Übertragung der Nutzdaten (16) über die zweite Kommunikationsverbindung (15) eine Ankopplungsvorrichtung (9) in dem Kraftfahrzeug (1) verwendet wird, welche insbesondere ein Halten des Mobiltelefons (12) in einer Übertragungsposition erfordert.

16. Kraftfahrzeug (1), umfassend wenigstens eine Kommunikationsvorrichtung (6, 7) zur Herstellung einer ersten Kommunikationsverbindung (14), die einem nicht-fahrerspezifischen Datenaustausch, umfassend den Austausch von Steuerdaten zur Nutzung des Kraftfahrzeugs (1) zum Telefonieren oder für sonstige Dienste, zugeordnet ist, von einem Mobiltelefon (12) zu dem Kraftfahrzeug (1), **dadurch gekennzeichnet, dass** die oder eine weitere Kommunikationseinrichtung (6, 7) zur Herstellung einer zweiten Kommunikationsverbindung (15) nach dem NFC-Standard zur Übertragung benutzerseitig und über eine mobiltelefonseitige Benutzeroberfläche ausgewählter fahrerspezifischer Nutzdaten (16), die ausschließlich über die zweite Kommunikationsverbindung (15) übertragbar sind, von dem Mobiltelefon (12) an das Kraftfahrzeug (1) ausgebildet ist, so dass zwei auf ihre dedizierten Zweckbestimmungen abgestimmte Kommunikationsverbindungen (14, 15) verwendet werden, von denen die eine einem nicht-fahrerspezifischen Datenaustausch zugeordnet ist, während die andere, die eine bewusste Handlung zum Aufbau und zur Datenübertragung erfordert, den ausgewählten fahrerspezifischen Nutzdaten zugeordnet ist.

17. Kraftfahrzeug nach Anspruch 16,
**dadurch gekennzeichnet,**
**dass** die Kommunikationsvorrichtung (6, 7) zur Herstellung der zweiten Kommunikationsverbindung (15) eine Ankopplungsvorrichtung (9) umfasst, welche insbesondere ein Halten des Mobiltelefons (12) durch eine Person in einer Übertragungsposition erfordert.

## Claims

1. Method for transmitting data between a mobile telephone (12) and a motor vehicle (1), wherein a first wireless communication connection (14), which is assigned to non-driver-specific data interchange comprising the interchange of control data for using the motor vehicle (1) to make a telephone call or for other services, is automatically established between the mobile telephone (12) and the motor vehicle (1) when the communication interface of the mobile telephone (12) is activated in a corresponding manner, and wherein driver-specific useful data (16) are transmitted from the mobile telephone (12) to the motor vehicle (1), **characterized in that** the driver-specific useful data (16) are transmitted to the motor vehicle (1) solely via a second communication connection (15) according to the NFC standard, wherein a user interface for selecting useful data (16) to be transmitted from useful data (16) which can be transmitted solely via the second communication connection (15) is displayed on the mobile telephone (12), wherein only the useful data (16) selected via the user interface are transmitted to the motor vehicle (1) via the second communication connection (15), with the result that two communication connections (14, 15), which are matched to their dedicated intended purposes, are used, one of which is assigned to non-driver-specific data interchange, while the other, which requires a deliberate action in order to be set up and to transmit data, is assigned to the selected driver-specific useful data.

2. Method according to Claim 1, wherein a Bluetooth connection is used as the first communication connection (14) and/or the first communication connection (14) is used to set up a telephone call via the motor vehicle (1) .

3. Method according to either of the preceding claims, wherein at least some of the useful data (16) are determined by an evaluation application of the mobile telephone (12).

4. Method according to one of the preceding claims, wherein the useful data (16) are used to supplement a driver profile stored in the motor vehicle (1).

5. Method according to one of the preceding claims, wherein the useful data (16) are used when operating at least one vehicle system.

6. Method according to one of the preceding claims, wherein contact data, in particular comprising addresses and/or telephone numbers, and/or appointment data and/or whereabouts of the user of the mobile telephone (12) and/or data relating to the use of the mobile telephone (12) are used as the useful data (16).

7. Method according to one of the preceding claims, wherein the useful data (16), in particular according to Claim 7, are used during operation of a navigation system (3) of the motor vehicle (1).

8. Method according to Claim 7, wherein at least some of the useful data (16), in particular appointment data and/or contact data, are used to determine a destination.

9. Method according to Claim 8, wherein active guidance to the destination confirmed by the driver, in particular, and/or selected from a plurality of determined destinations is carried out by the navigation system (3).

10. Method according to Claim 8, wherein information relating to traffic obstructions on the route to the destination are determined and output for at least one destination which is most likely to be selected as passive navigation.

11. Method according to one of Claims 8 to 10, wherein data relating to past journeys made by the driver are also used in the motor vehicle (1) when determining the destination.

12. Method according to one of Claims 8 to 11, wherein, in addition to the destination, a future time of the journey and a duration of the journey are also determined, in which case, if the journey is extended in such a manner that it exceeds a threshold value, the motor vehicle (1) sends a relevant notification to the user.

13. Method according to one of Claims 7 to 12, wherein at least some of the useful data (16) are used to determine a suitable parking space.

14. Method according to one of Claims 7 to 13, wherein navigation data are transmitted from the navigation system (3) to the mobile telephone (12) and are used there for further guidance of the driver after the journey has been completed.

15. Method according to one of the preceding claims, wherein a coupling apparatus (9) in the motor vehicle (1) is used to transmit the useful data (16) via the second communication connection (15) and requires, in particular, the mobile telephone (12) to be held in a transmission position.

16. Motor vehicle (1), comprising at least one communication apparatus (6, 7) for establishing a first communication connection (14), which is assigned to non-driver-specific data interchange comprising the interchange of control data for using the motor vehicle (1) to make a telephone call or for other services, from a mobile telephone (12) to the motor vehicle (1), **characterized in that** the communication device or a further communication device (6, 7) is designed to establish a second communication connection (15) according to the NFC standard for the purpose of transmitting driver-specific useful data (16) selected by the user using a user interface on the mobile telephone, which driver-specific useful data can be transmitted solely via the second communication connection (15), from the mobile telephone (12) to the motor vehicle (1), with the result that two communication connections (14, 15), which are matched to their dedicated intended purposes, are used, one of which is assigned to non-driver-specific data interchange, while the other, which requires a deliberate action in order to be set up and to transmit data, is assigned to the selected driver-specific useful data.

17. Motor vehicle according to Claim 16, **characterized in that** the communication apparatus (6, 7) comprises, for the purpose of establishing the second communication connection (15), a coupling apparatus (9) which requires, in particular, a person to hold the mobile telephone (12) in a transmission position.

## Revendications

1. Procédé de transmission de données entre un téléphone mobile (12) et un véhicule automobile (1), dans lequel une première liaison de communication sans fil (14), qui est associée à un échange de données non spécifique au conducteur, comprenant l'échange de données de commande pour l'utilisation du véhicule automobile (1) pour téléphoner ou pour d'autres services, est établie automatiquement entre le téléphone mobile (12) et le véhicule automobile (1) lorsque l'interface de communication du téléphone mobile (12) est activée en conséquence et dans lequel des données utiles (16) spécifiques au conducteur sont transmises du téléphone mobile (12) au véhicule automobile (1),
**caractérisé en ce que** les données utiles (16) spécifiques au conducteur sont transmises au véhicule automobile (1) exclusivement par le biais d'une seconde liaison de communication (15) suivant la norme NFC, dans lequel une interface utilisateur permettant la sélection de données utiles (16) à transmettre parmi des données utiles (16) pouvant être transmises exclusivement par le biais de la seconde liaison de communication (15) est affichée sur le téléphone mobile (12), dans lequel seules les données utiles (16) sélectionnées par le biais de l'interface utilisateur sont transmises au véhicule automobile (1) par le biais de la seconde liaison de communication (15), de sorte que deux liaisons de communication (14, 15) adaptées à leurs finalités dédiées sont utilisées, dont l'une est associée à un échange de données non spécifique au conducteur, tandis que l'autre, qui nécessite une action consciente pour l'établissement et la transmission de données, est associée aux données utiles sélectionnées spécifiques au conducteur.

2. Procédé selon la revendication 1,
dans lequel, en tant que première liaison de communication (14), on utilise une liaison Bluetooth et/ou on utilise la première liaison de communication (14) pour établir une conversation téléphonique par le biais du véhicule automobile (1).

3. Procédé selon l'une quelconque des revendications précédentes,
dans lequel une partie au moins des données utiles (16) est déterminée par une application d'évaluation du téléphone mobile (12).

4. Procédé selon l'une quelconque des revendications précédentes,
dans lequel les données utiles (16) sont utilisées pour compléter un profil de conducteur stocké dans le véhicule automobile (1).

5. Procédé selon l'une quelconque des revendications précédentes,
dans lequel les données utiles (16) sont utilisées lors du fonctionnement d'au moins un système de véhicule.

6. Procédé selon l'une quelconque des revendications précédentes,
dans lequel, en tant que données utiles (16), on utilise des données de contact, comprenant notamment des adresses et/ou des numéros de téléphone, et/ou des données de rendez-vous et/ou des lieux de séjour de l'utilisateur du téléphone mobile (12) et/ou des données concernant l'utilisation du téléphone mobile (12).

7. Procédé selon l'une quelconque des revendications précédentes,
dans lequel les données utiles (16), notamment selon la revendication 7, sont utilisées lors du fonctionnement d'un système de navigation (3) du véhicule automobile (1) .

8. Procédé selon la revendication 7,
dans lequel une partie au moins des données utiles (16), notamment des données de rendez-vous et/ou des données de contact, sont utilisées pour déterminer un lieu de destination.

9. Procédé selon la revendication 8,
dans lequel un guidage actif vers le lieu de destination, notamment confirmé par le conducteur et/ou sélectionné parmi plusieurs lieux de destination déterminés, est effectué par le système de navigation (3).

10. Procédé selon la revendication 8,
dans lequel, pour au moins un lieu de destination le plus probablement atteint, des informations concernant des obstacles à la circulation sur le trajet vers le lieu de destination sont déterminées et délivrées en tant que navigation passive.

11. Procédé selon l'une quelconque des revendications 8 à 10,
dans lequel, lors de la détermination du lieu de destination, on utilise également des données concernant des trajets passés du conducteur dans le véhicule automobile (1).

12. Procédé selon l'une quelconque des revendications 8 à 11,
dans lequel, en plus du lieu de destination, un instant futur du trajet et une durée du trajet sont déterminés, dans lequel, en cas de prolongation du trajet dépassant une valeur de seuil, le véhicule automobile (1) envoie une notification à l'utilisateur à ce sujet.

13. Procédé selon l'une quelconque des revendications 7 à 12,
dans lequel une partie au moins des données utiles (16) est utilisée pour déterminer une place de stationnement appropriée.

14. Procédé selon l'une quelconque des revendications 7 à 13,
dans lequel des données de navigation sont transmises du système de navigation (3) au téléphone mobile (12) et y sont utilisées pour prolonger le guidage du conducteur après la fin du trajet.

15. Procédé selon l'une quelconque des revendications précédentes,
dans lequel, pour la transmission des données utiles (16) par le biais de la seconde liaison de communication (15), on utilise un dispositif de couplage (9), prévu dans le véhicule automobile (1), qui nécessite notamment un maintien du téléphone mobile (12) dans une position de transmission.

16. Véhicule automobile (1), comprenant au moins un dispositif de communication (6, 7) destiné à l'établissement d'une première liaison de communication (14), qui sert à un échange de données non spécifique au conducteur, comprenant
l'échange de données de commande pour l'utilisation du véhicule automobile (1) pour téléphoner ou pour d'autres services, d'un téléphone mobile (12) au véhicule automobile (1), **caractérisé en ce que** ledit ou un autre dispositif de communication (6, 7) est conçu pour établir une seconde liaison de communication (15) suivant la norme NFC pour la transmission, côté utilisateur et par le biais d'une interface utilisateur côté téléphone mobile, de données utiles (16) sélectionnées spécifiques au conducteur, qui peuvent être transmises exclusivement par le biais de la seconde liaison de communication (15), du téléphone mobile (12) au véhicule automobile (1), de sorte que deux liaisons de communication (14, 15) adaptées à leurs finalités dédiées sont utilisées, dont l'une est associée à un échange de données non spécifique au conducteur, tandis que l'autre, qui nécessite une action consciente pour l'établissement et la transmission de données, est associée aux données utiles sélectionnées spécifiques au conducteur.

17. Véhicule automobile selon la revendication 16, **caractérisé en ce que** le dispositif de communication (6, 7) comprend, pour l'établissement de la seconde liaison de communication (15), un dispositif de couplage (9) qui nécessite notamment un maintien du téléphone mobile (12) par une personne dans une position de transmission.
